# EUROPEAN PATENT APPLICATION

(11) **EP 1 254 594 A1**
(43) Date of publication of application: **06.11.2002**
(21) Application number: 02076681.2
(22) Date of filing: 29.04.2002
(51) Int. Cl.: A01G 9/10

(54) **Method and apparatus for making culture plugs and placing them into a tray**

(30) Priority: 02.05.2001 NL 1017981
(71) Applicant: Van der Suis Cigar Machinery B.V., 8261 AB Kampen (NL)
(72) Inventor: Andres, Ryszard, 1447 ET Purmerend (NL); Mulder, Carel, 9422 BH Smilde (NL)
(74) Representative: Van Breda, Jacques

(57) **Abstract**

A method and an apparatus (1) for the production and placing into trays of culture plugs, wherein the culture plugs are formed by a cutting step from at least one strand before being placed into the trays, wherein the at least one strand is cut in the cutting step in a substantially horizontal position to obtain the culture plugs.

## Description

The invention relates to a method and an apparatus for the production and placing into trays of culture plugs, wherein the culture plugs are formed by a cutting step from at least one strand before being placed into the trays.

This method and apparatus is known from EP B 0 722 655.

In the known method and apparatus, the strands from which the culture plugs are formed are supplied horizontally, are subsequently tilted and then by the strand base placed into culture plug holders. In the position reached at that moment, a cutting device comes into action for cutting the culture plugs from the strands, which are in the meantime positioned vertically, after which placement of the culture plugs into the tray can take place.

This known method and apparatus have a number of disadvantages.

Firstly there is rather a lot of waste because the strands from which the culture plugs are produced never have the exact length of multiples of culture plug lengths.

A further disadvantage is that due to the many different processing steps that have to be carried out on the strands before the same have been processed into culture plugs placed into the trays, the production speed of the known apparatus is not very high.

Yet another disadvantage is that the known apparatus is only suitable for processing strands into culture plugs that are placed into a tray of one specific size. If processing in trays of another size has to take place, the known apparatus has to be adapted correspondingly, which in practice means that another machine has to be used.

Still another disadvantage of the known method and apparatus is that when the culture plugs are being cut from the strand in vertical position they become somewhat compacted. This is caused by the weight the strand exerts on the culture plug at the base of the strand.

It is the object of the invention to provide a method and apparatus with which this and other disadvantages are avoided.

According to the invention the method is characterized, in that the at least one strand is cut in the cutting step in a substantially horizontal position to obtain the culture plugs. The apparatus with which this method may conveniently be carried out is in accordance with the invention characterized in that the feed device comprises an at least substantially horizontally oriented trough and, at least while the cutting device is in action, culture plug holders succeed the at least one trough in its extended direction.

The primary advantage obtained with the method and apparatus according to the invention is that there is little or no waste after processing the strands into culture plugs. The reason is that the horizontal position of the strands allows the complete strands to be used, because any cutting remains from one strand can simply be supplemented with a strand portion of a subsequent strand. Cutting the strand in the horizontal position brings the additional advantage that the culture plugs stay more airy.

It is desirable that during the cutting step, the culture plugs to be cut from the at least one strand are each put separately in a culture plug holder that is adjustable between a horizontal and a vertical position. This may be realised simply by accommodating the culture plug holders in a rotating drum, so that by rotating the drum, the culture plug holders are adjustable between a horizontal and a vertical position. In this way the cut culture plugs can very simply be moved from the horizontal position in which they are cut from the strand into the vertical position, from which the loading of the tray takes place.

In this connection it is desirable that after completion of the cutting step, the culture plug holder is adjusted directly or not directly into the vertical position from which an ejector member pushes the culture plugs out of the culture plug holder and into the tray.

To this end the apparatus is preferably characterized in that during operation a tray is placed under the drum for receiving the culture plugs, and that an ejector member is placed in the drum for pushing the culture plugs out of the culture plug holders.

In another aspect of the invention the apparatus is characterized in that the feed device comprises a depositing table and a cutting table succeeding one another, each equipped with two or more troughs extending next to one another, and in that the spacing between the troughs of the depositing table is adjustable. This allows the strands to be processed to be supplied with mutual cutting line distances that differ from the cutting line distance of the culture plugs in the tray. By adjusting the trough distances of the depositing table which serves for receiving the strands to be processed, the desirable cutting line distance of the strands and thus of the culture plugs can be realised.

This mutual distance of the troughs of the depositing table may be realised in different ways. Conceivably, they may assume a slightly tapering or diverging orientation in order to realise the adaptation of the spacing between the strands. It is also conceivable, by means of a generally known concertina construction, to vary the troughs' mutual distance between the cutting line distance of the strands on the depositing table and the cutting line distance of the strands to be assumed for cutting on the cutting table. With a view to the undisturbed run of the machine, the latter variant is usually preferred.

Desirably, the spacing between the troughs of the cutting table is equal to the spacing between the culture plugs in the tray.

It is further preferred that the spacing between the troughs of the cutting table and that of adjacent culture plug holders be adjustable. In this way the same machine can simply be adapted to the dimensions of the trays to be loaded, so that no additional machine is needed.

The spacing between the adjacent culture plug holders may be simply regulated by embodying the apparatus such that the drum is comprised of discs in which the culture plug holders are accommodated, the mutual distance of which discs is adjustable.

In still another aspect of the invention, it is preferred for the cutting device to be provided with a band knife arranged between the feed device and the culture plug holders. The use of such a band knife in the substantially horizontally arranged feed device and culture plug holders for cutting culture plugs from the strands that are supplied allows the strands to be processed into culture plugs very rapidly.

The invention will now be further elucidated on the basis of a non-limiting exemplary embodiment referring to the appended drawing.

The drawing shows:
In Figure 1 a perspective view of the apparatus according to the invention;
In Figure 2 a partially cut away view of a drum, which is part of the apparatus according to the invention.

Identical reference numbers in the figures refer to similar parts.

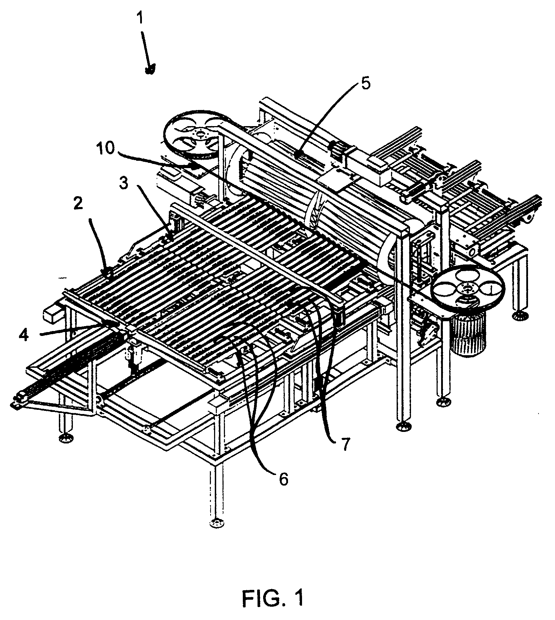

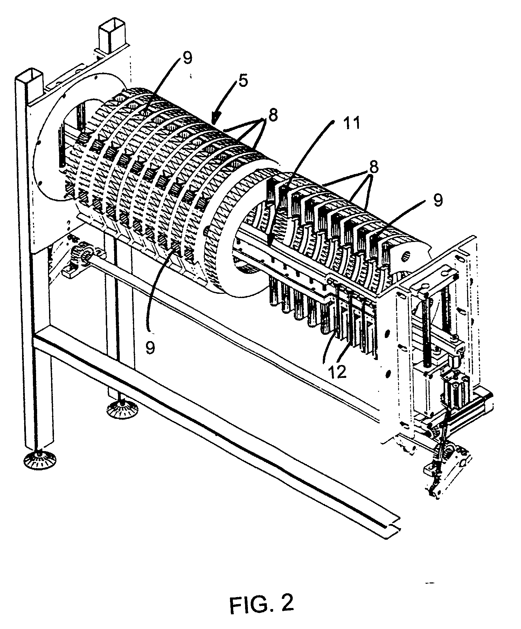

Figure 1 shows the apparatus generally indicated with reference number 1 for the production and placing into a tray of culture plugs. This apparatus 1 receives by means of a feed belt, not further shown, strands arranged at a fixed mutual distance, which are placed upon a depositing table 2. The depositing table 2 is succeeded by a cutting table 3; depositing table 2 and cutting table 3 together form the feed device of the apparatus 1 for the production and placing into trays of culture plugs. At their cross-cut end, the strands that are continuously supplied by the feed device 2, 3 are pushed into culture plug holders 9 accommodated in a rotating drum 5. In Figure 2, this drum 5 with culture plug holders 9 is shown in more detail. This drum will be referred to later on.

Figure 1 further shows that both the depositing table 2 and the cutting table 3 is furnished with several troughs 6 and 7, respectively, arranged next to each other. Preferably at least the troughs 6 of the depositing table 2 are adjustable, in order to allow the spacing between the strands supplied by the feed belt (not shown) to be adjusted to the desired spacing of the strands on the cutting table 3. It is also desirable for the spacing between the troughs 7 of the cutting table 3 to be the same as the spacing between the culture plugs in the tray, which is the final destination of the culture plugs. To increase the diversity of the apparatus 1 according to the invention, it is preferable in this connection, for the spacing between the troughs 7 of the cutting table 3 as well as the spacing between adjacent culture plug holders 9 in the drum 5 to be adjustable.

The adjustability of the spacing between adjacent culture plug holders 9 may best be illustrated with reference to Figure 2 showing the drum 5, in which the culture plug holders are accommodated. This drum 5 is preferably comprised of discs 8, a number of which is shown in a cut away view at the right of the figure. Said discs 8 are mutually adjustable to a desirable distance and accommodate the above mentioned culture plug holders 9.

A simple explanation of the working of the apparatus is as follows. After the desired spacing between the strands has been realised by means of the depositing table 2 and the lateral adjustment of the troughs 6 that are a part thereof, they are pushed into the troughs 7 by means of the presser member 4 on the cutting table 3. The cross-cut ends of the strands are inserted into the culture plug holders 9 that succeed the troughs 7 in their extended direction by aligning the drum 5 to the desired position. In that position the band knife 10 comes into action, which knife is disposed between feed device 2, 3 and the culture plug holders 9 accommodated in the drum 5. After the culture plugs have thus been cut off the strands in the troughs 7, a partial rotation of the drum 5 takes place in order to position an empty set of adjacent culture plug holders 9 into horizontal position and in the extended direction of the troughs 7. When the empty culture plug holders 9 have reached that position, the presser member 4 is able to push strands that are in the troughs 7 further, until the cross-cut sides of the strands are inserted into the culture plug holders 9, after which a following cutting step with the band knife 10 can take place.

Referring now to Figure 2, an ejector member 11 is shown accommodated inside the drum 5. After loaded culture plug holders 9 have been rotated to a vertical position, ejectors 12, which are part of the ejector member 11, push the culture plugs contained therein out of the culture plug holders 9 into a tray that is provided under the drum 5. This tray is not shown in the figure, but for the person skilled in the art this requires no further explanation.

It is remarked that the band knife 10 is preferably a double edged knife, that is to say it can be effective both in the upward and in the downward direction of the knife 10. This increases the productivity of the apparatus according to the invention.

Furthermore, the ejectors 12 of the ejecting member 11 are equipped such that as they push the culture plugs out of the culture plug holder 9, they make a planting hole in the culture plugs.

## Claims

1. A method for the production and placing into trays of culture plugs, wherein the culture plugs are formed by a cutting step from at least one strand before being placed into the trays, **characterized in that** the at least one strand is cut in the cutting step in a substantially horizontal position to obtain the culture plugs.

2. A method according to claim 1, **characterized in that** during the cutting step, the culture plugs to be cut from the at least one strand are each put separately in a culture plug holder that is adjustable between a horizontal and a vertical position.

3. A method according to claim 2, **characterized in that** after completion of the cutting step, the culture plug holder is adjusted directly or not directly into the vertical position from which an ejector member pushes the culture plugs out of the culture plug holder and into the tray.

4. An apparatus for the production and placing into trays of culture plugs, provided with a feed device (2, 3) for at least one strand from which the culture plugs are formed, a cutting device (10), and culture plug holders (9) for receiving the culture plugs that have been cut off the at least one strand, and an ejector member (11, 12) for pushing the culture plugs out of the culture plug holder (9) into the tray, **characterized in that** the feed device (2, 3) comprises a substantially horizontally oriented trough (7) and, at least while the cutting device (10) is in action, culture plug holders (9) succeed the at least one trough (7) in its extended direction.

5. An apparatus according to claim 4, **characterized in that** the culture plug holders (9) are accommodated in a rotating drum (5), so that the culture plug holders are adjustable between a horizontal and a vertical position.

6. An apparatus according to claim 5, **characterized in that** during operation, a tray is placed under the drum (5) for receiving the culture plugs.

7. An apparatus according to claim 5 or 6, **characterized in that** an ejector member (11, 12) is placed in the drum for pushing the culture plugs out of the culture plug holders (9).

8. An apparatus according to one of the claims 4-7, **characterized in that** the feed device (2, 3) comprises a depositing table (2) and a cutting table (3) succeeding one another, each equipped with two or more troughs (6, 7) extending next to one another, and **in that** the spacing between the troughs (6) of the depositing table (2) is adjustable.

9. An apparatus according to claim 8, **characterized in that** the spacing between the troughs (7) of the cutting table (3) is equal to the spacing between the culture plugs in the tray.

10. An apparatus according to claim 8 or 9, **characterized in that** the spacing between the troughs (7) of the cutting table (3) and adjacent culture plug holders (9) is adjustable.

11. An apparatus according to claim 10, **characterized in that** drum (5) is comprised of discs (8) in which the culture plug holders (9) are accommodated, which discs are at a mutually adjustable distance.

12. An apparatus according to one of the claims 4-11, **characterized in that** the cutting device is provided with a band knife (10) arranged between the feed device (2, 3) and the culture plug holders (9).
